# EUROPÄISCHE PATENTSCHRIFT

(11) **EP 1 192 600 B1**
(45) Veröffentlichungstag und Bekanntmachung des Hinweises auf die Patenterteilung: **02.01.2003**
(21) Anmeldenummer: 00951254.2
(22) Anmeldetag: 06.07.2000
(51) Int. Cl.: G07B 15/00

(54) **VORRICHTUNG ZUR FLEXIBLEN GEBÜHRENERFASSUNG**
FLEXIBLE CHARGE COLLECTION SYSTEM
DISPOSITIF DE COLLECTE DE TAXES FLEXIBLE

(30) Priorität: 06.07.1999 DE 19931076
(43) Veröffentlichungstag der Anmeldung: 03.04.2002
(73) Patentinhaber: GSI Gesellschaft für Systemtechnik und Informatik mbH, 88682 Salem (DE)
(72) Erfinder: DÜNHAUPT, Rolf, D-88682 Salem (DE); STORCK, Bruno, D-88682 Salem (DE)
(74) Vertreter: Roth, Klaus
(86) Internationale Anmeldenummer: DE0002166
(87) Internationale Veröffentlichungsnummer: WO01003073

(56) Entgegenhaltungen:
- EP-A- 0 752 688
- EP-A- 0 802 509
- EP-A- 0 848 360
- WO-A-97/04421
- DE-A- 4 344 433
- DE-A- 4 417 045
- DE-A- 4 427 392
- DE-A- 19 654 847
- FR-A- 2 664 075
- NL-A- 9 301 902
- US-A- 5 694 322

## Beschreibung

Die Erfindung betrifft eine Vorrichtung zur flexiblen Gebührenerfassung nach dem Oberbegriff des Anspruchs 1.

Für die Benutzung von Autobahnen mit Lastkraftwagen wird bereits in einigen Ländern eine Straßenbenutzungsgebühr erhoben, die an elektronischen Terminals streckenabhängig entrichtet werden kann. Eine Vorrichtung zur Erhebung derartiger Straßenbenutzungsgebühren ist beispielsweise in der Druckschrift DE 196 54 847 beschrieben. Bei dem bekannten System ist es erforderlich, vor Antritt der Fahrt den gewünschten Weg anzugeben, so dass aufgrund dieser Angabe der Gebührenbetrag berechnet und entrichtet werden kann. Die Zahlung kann hierbei bargeldlos über die gängigen bargeldlosen Zahlungssysteme oder in Form einer Barzahlung über das in der oben genannten Druckschrift beschriebene System entrichtet werden.

Eine Kontrolle des tatsächlich eingeschlagenen Wegs findet bei einem System gemäß dem Stand der Technik nur dann statt, wenn der Gebührenpflichtige in eine übliche Verkehrskontrolle gerät und der entsprechenden Kontrollperson auf Verlangen einen Gebührennachweis vorlegen muss. Unterbleibt eine derartige Verkehrskontrolle, so bleibt eine von der gebuchten Wegstecke abweichende Fahrt ohne aktive Umbuchung des Gebührenpflichtigen ohne Konsequenzen.

Die Druckschrift US 694 322 beschreibt eine Vorrichtung und ein Verfahren zur Bestimmung von Straßenbenutzungsgebühren unter Zuhilfenahme eines Ortungssystems. Das Ortungssystem umfasst eine Mehrzahl von Transmittern, die entweder im Weltraum oder auf der Erde angeordnet sind und die Positionsinformation aussenden. Diese Transmitter dienen dazu, eine sogenannten GPS-Technik auszubilden, die es einem mobilen Gerät, das in dem Fahrzeug mitgeführt wird, ermöglicht, seine Position zu bestimmen.

In der Druckschrift EP 802 509 wiederum wird eine Vorrichtung beschrieben, bei dem eine Ortung mit Hilfe eines bekannten. satellitengestützten Ortungssystem stattfindet und Baken an verschiedenen Stellen im Straßensystem vorhanden sind, die nicht der Positionsermittlung, sondern nur der Gebührenermittlung und der Gebührenerhebung dienen.

Aufgabe der Erfindung ist es daher, ausgehend von einer Vorrichtung der einleitend genannten Art ein vereinfachtes System vorzuschlagen, bei dem die Kontrollmöglichkeiten verbessert sind.

Diese Aufgabe wird durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass das Ortungssystem an gebührenpflichtigen Streckenabschnitten installiertes Sende- und Empfangseinheiten umfasst, die mit einer Kontrolleinheit in Verbindung stehen und die drahtlos mit entsprechenden, vom Gebührenpflichtigen mitgeführten Sende- und Empfangseinheiten kommunizieren, um den Gebührenpflichtigen beim Passieren der Sende- und Empfangseinheiten zu identifizieren.

Vorteilhafterweise wird eine über ein öffentliches Datennetz zugängliche Buchungsstelle zur Buchung einer gebührenpflichtigen Fahrt vorgesehen. Durch die Möglichkeit der Buchung über ein öffentlich zugängliches Datennetz, beispielsweise dem Internet, entfällt die Notwendigkeit, feste Buchungsterminals, beispielsweise in Tankstellen, Autohöfen oder dergleichen, anzufahren. Die Buchung kann in diesem Fall ohne weiteres durch einen mobilen Computer mit Funkmodem während der Fahrt vorgenommen werden. Insbesondere im Hinblick auf die Entwicklungen im Bereich des Internetzugangs, beispielsweise durch Mobiltelefone, wird die Buchung der Fahrt erheblich erleichtert.

Mit Hilfe eines erfindungsgemäßen Ortungssystems lässt sich in vorteilhafterweise nicht nur eine Kontrolle des tatsächlich eingeschlagenen Wegs durchführen. Es kann vielmehr darüber hinaus auch eine flexiblere Gebührenerfassung erfolgen. So kann die Berechnung der fälligen Gebühren automatisch anhand des tatsächlich eingeschlagenen Wegs vorgenommen werden. Die Eingabe einer gewünschten Wegstrecke vor Fahrtantritt ist hierdurch entbehrlich. Insbesondere spontane Streckenänderungen, beispielsweise aufgrund logistischer Notwendigkeiten oder aufgrund der Vorgabe einer Navigationshilfe können somit spontan vorgenommen werden. Wegänderungen können beispielsweise aufgrund von Staumeldungen, Baustellen oder dergleichen erforderlich und sinnvoll sein.

Weiterhin kann auch die Gebührenhöhe abhängig von verschiedenen Parametern bestimmt werden. So kann für die gleiche Wegstrecke parameterabhängig eine unterschiedliche Gebühr erhoben werden. Als Parameter können hierbei beispielsweise die Verkehrskapazität einer Wegstrecke in Verbindung mit entsprechender Verkehrsauslastung bestimmt werden. Es kann eine Gebührenänderung bei einer Kapazitätsänderung, beispielsweise aufgrund einer Baustelle oder ähnlichen Hindernissen, vorgenommen werden. Auch die Zeit, in der eine bestimmte Wegstrecke gefahren wird, kann für die Höhe der Gebühren in Betracht gezogen werden. So kann die gleiche Wegstrecke beispielsweise bei Stoßzeiten mit hohem Verkehrsaufkommen höher berechnet werden, als bei Zeiten mit weniger Verkehrsaufkommen, beispielsweise bei Nachtfahrten oder dergleichen. Mit Hilfe parameterabhängiger Gebühren kann letzten Endes auch eine Steuerung von Verkehrsströmen innerhalb gewisser Grenzen erzielt werden.

Für die Zahlung der Gebühren kann das entsprechende Buchungsgerät entsprechend ausgebildet werden. So kann beispielsweise ein Identifikationsmedium zur Identifikation des Benutzers vorgesehen werden. Hierbei wird die Buchungsstelle vorteilhafterweise so ausgestattet, dass sie mit wenigstens einer elektronischen Kontrolleinheit zur Übergabe von Daten zur Personenidentifikation in Verbindung steht, die aufgrund dieser Daten in der Lage ist, die Berechtigung zur Inanspruchnahme der Leistung festzustellen.

Somit wird anstelle der Ausgabe eines Berechtigungsnachweises an den Benutzer eine Identifikation des Benutzers auf Seiten des Anbieters vorgenommen, die auf elektronisch übermittelten Daten zur Identifikation beruhen. Diese Identifikationsdaten können auf verschiedene Weise erzeugt werden.

So können Identifikationsdaten von bereits bei den Benutzern vorhandenen Identifizierungsmitteln wie Kreditkarten, Scheckkarten, elektronisch lesbaren Personalausweisen, Freischaltkarten für Funktelefone, elektronisch lesbare Führerscheine, Krankenversicherungskarten usw. verwendet werden. Gegebenenfalls wäre es auch denkbar, ein separates Medium für eine elektronische Signatur, beispielsweise eine Chipkarte zur mehrfachen Benutzung der erfindungsgemäßen Vorrichtung auszugeben.

Eine weitere Möglichkeit zur Identifikation wäre die Mitteilung von Kennwörtern, Personenidentifikationsnummern oder dergleichen, wie sie für den Zugriff zu verschiedensten Datennetzen oder Automaten bereits in Verwendung sind.

Als Identifizierungsmedium kommt, wie bereits erwähnt, jede Form von im Verkehr befindlichen, personenbezogenem elektronisch lesbarem Medium oder aber auch ein von der Buchungsstelle generierbares möglichst fälschungssicheres Identifikationsmedium in Frage. Die Methoden zur elektronischen Identifizierung werden zunehmend verfeinert. Es ist davon auszugehen, dass eine "elektronische Signatur" künftig eine immer größere Rolle spielen wird.

Der entscheidende Unterschied zur bisherigen Vorgehensweise liegt darin, dass die Buchung und gegebenenfalls die Bezahlung elektronisch, beispielsweise über einen Telefonanruf oder eine Interaktion im Internet bei einem entsprechenden zur Buchung eingerichteten Rechner stattfindet, wobei zugleich die Nutzungsberechtigung der jeweils gebuchten Leistung erteilt wird. Man könnte in diesem Sinne von einer Art virtuelle Vignette oder virtuellem Ticket sprechen, das in Form entsprechender Identifikationsdaten zur Verfügung steht und die vor Ort während der Fahrt prüfbar sind.

In einer Weiterbildung dieser Ausführungsform wäre auch die Vergabe von Abonnements denkbar, bei denen in regelmäßigen Zeitabständen abgerechnet wird, ohne dass sich der Benutzer um die jeweils erneute Buchung kümmern muss. Dies wäre beispielsweise bei der Erhebung von Straßenbenutzungsgebühren für Vielfahrer von Vorteil, die sich die Buchung in diesem Fall vor Fahrtantritt sparen können. Durch das erfindungsgemäße Ortungssystem ist für einen solchen. Personenkreis eine Straßenbenutzungsgebühr ähnlich einfach zu handhaben, wie die Benutzung eines Mobiltelefons.

Die erfindungsgemäße Vorrichtung wird vorzugsweise zur Erhebung von Straßengebühren wie oben angeführt, verwendet. Die erfindungsgemäße Vorrichtung kann jedoch auch noch anderweitig genutzt werden. Sie ist überall dort verwendbar, wo weg- oder bewegungsabhängig eine Gebührenerhebung erforderlich ist. So kommt beispielsweise die Erhebung von Gebühren in der Binnenschifffahrt in Frage. Die Gebühren können dabei beispielsweise für die Benutzung von Kanälen und/oder Schleusen erhoben werden.

Denkbar wäre auch der Einsatz in Freizeitanlagen, bei denen die Benutzung entsprechender Angebote innerhalb der Freizeitanlage erfasst werden. Eine beispielhafte Möglichkeit besteht darin, in einer Skiarena die Anzahl der Fahrten liftbezogen, uhrzeitbezogen oder auch abhängig von anderen Parametern, beispielsweise dem Wetter usw. zu erfassen und so eine äußerst flexible Preisgestaltung und Abrechnung zu ermöglichen.

So kann die gleiche Leistung zur unterschiedlichen Tageszeit unterschiedliche Kosten verursachen, je nachdem wie hoch die Auslastung oder gegebenenfalls auch die Überlastung der entsprechenden Anlage ist.

Auch die Benutzung öffentlicher Verkehrsmittel kann mit Hilfe eines erfindungsgemäßen Systems gebucht, überwacht und/oder bezahlt werden. So könnte beispielsweise eine Bus- oder Bahnreise eines Gebührenpflichtigen, der ein Mobiltelefon mit den oben angeführten Funktionen mit sich führt, automatisch erfasst und abgerechnet werden. Auch hier ist mit Hilfe eines erfindungsgemäßen Systems eine wesentlich flexiblere Preisgestaltung möglich, als dies bislang der Fall war.

In vorteilhafter Weise umfasst die Buchungsstelle eine Einheit zur Durchführung von bargeldlosem Zahlungsverkehr, beispielsweise über Kreditkarten oder Scheckkarten. Hierdurch ist mit der Buchung bereits die Zahlung und Abrechnung geregelt. Eine weitere Möglichkeit zur Zahlungsabwicklung wäre auch die Einrichtung einer Kontoführung für ein Guthaben auf dem Rechner der Buchungsstelle, das über Bankanweisungen, Bareinzahlungen usw. aufzufüllen ist.

Sofern der gebührenpflichtige Weg bei der Buchung vorbestimmt ist, so kann mit Hilfe der Ortung eine Abweichung von diesem Weg festgestellt werden und entsprechende Gegenmaßnahmen ergriffen werden. So können beispielsweise Strafmaßnahmen in Form von Bußgeldern oder dergleichen selbsttätig ausgelöst werden oder aber eine Personenkontrolle am jeweiligen Ort veranlasst werden.

Zwei Ausführungsbeispiele der Erfindung sind in der Zeichnung schematisch dargestellt und werden anhand der Figuren nachfolgend näher erläutert.
- Fig. 1: zeigt ein Blockdiagramm einer erfindungsgemäßen Vorrichtung,
- Fig. 2: ein Blockdiagramm für einen Verfahrensablauf bei der Benutzung einer Vorrichtung gemäß Fig. 1 und
- Fig. 3: eine weitere Ausführungsform eines solchen Verfahrensablaufs.

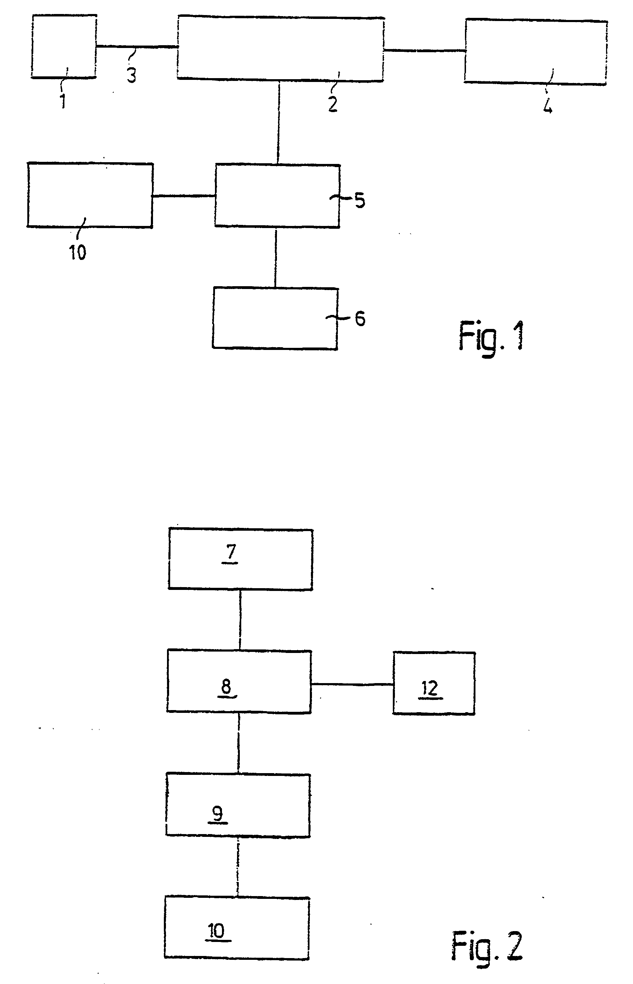

Eine Eingabeeinheit 1 steht gem. Fig. 1 mit einem Buchungsrechner 2 über eine Leitung 3 in Verbindung. Die Leitung 3 kann über ein öffentliches Kommunikationsnetz geschaltet sein.

Der Buchungsrechner 2 steht mit einer Abrechnungsstelle 4 sowie einer Kontrolleinheit 5 in Verbindung. Die Kontrolleinheit steht ihrerseits mit dem Ortungssystem 10 in Verbindung. Über die Abrechnungsstelle 4 ist der Buchungsrechner 2 in der Lage, die Bonität des buchenden Benutzers zu prüfen, beispielsweise durch Einsicht in ein eigens dafür eingerichtetes Guthabenkonto oder aber auch durch die Abfragen, die Kreditinstitute üblicherweise zur Prüfung der Bonität durchführen.

Die Kontrolleinheit 5, die z. B. von einem Kontrolleur mitgeführt wird oder in einem Rechner vorgesehen wird, verfügt über eine Identifizierungseinheit 6. Die Kontrolleinheit 5 und die Identifizierungseinheit 6 können beispielsweise durch einen Zentralrechner eines Funktelefonnetzes gebildet werden, bei dem die Identifikation eines Teilnehmers bei der Zuschaltung ins Netz bereits Stand der Technik ist.

Es können jedoch auch andere Identifizierungseinheiten, z. B. Chipkartenleser, usw. verwendet werden.

Die erfindungsgemäße Vorrichtung kann z. B. die folgende Arbeitsabfolge aufweisen.

In dem Ausführungsbeispiel gemäß dem Blockdiagramm in Fig. 2 erfolgt zunächst die Buchung 7 mit anschließender Abrechnung 8 und Bezahlung. Erst nach Abschluss der Zahlung erfolgt die Freigabe 9 des gebuchten Wegs im entsprechenden Leistungsumfang. Diese Vorgehensweise entspricht dem bisherigen Ablauf, bei dem jedoch der Gebührennachweis, z. B. in Form einer Vignette, eines Tickets, eines Fahrscheins, usw. zur Aushändigung und Übersendung entfällt. Anstelle dieses Gebührennachweises tritt die zur Identifikation notwendige Information, die bereits beim Benutzer vorliegt und der Buchungsstelle übermittelt wird und/oder von der Buchungsstelle generiert und dem Benutzer übergeben wird. Durch Mitteilung dieser Identifizierungsinformation an einen Kontrolleur, z. B. mit automatischer Kontrolleinheit, ist dieser sodann in der Lage, die korrekte Gebührenzahlung zu erkennen.

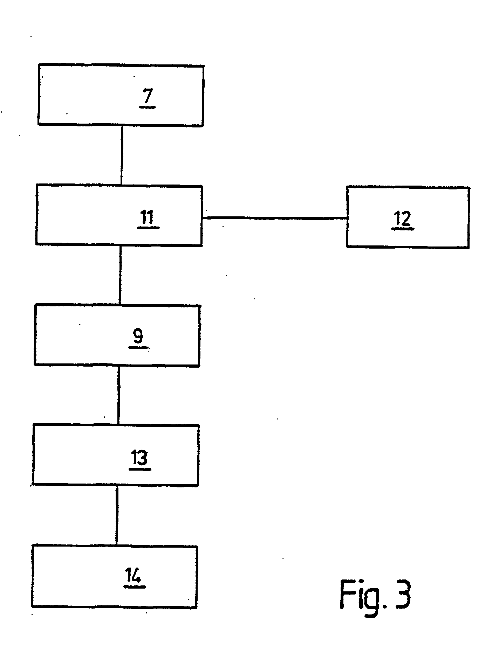

Die Ausführung gemäß Fig. 3 nutzt die zusätzlichen Möglichkeiten, die durch die erfindungsgemäße Vorrichtung möglich sind.

Hier erfolgt nach der Buchung zunächst eine Prüfung 11 dahingehend, ob der buchende Benutzer für eine später durchzuführende Abrechnung vertrauenswürdig ist. Nach Abschluss dieser Bonitätsprüfung wird entweder die Buchung verweigert und es erfolgt ein Abbruch 12 oder aber es erfolgt eine Freigabe 9 bei positiver Prüfung. Nunmehr hat der Benutzer die Möglichkeit, die Leistung 13 in Form des gebührenpflichtigen Weges in nicht notwendiger Weise vorher festzulegendem Umfang oder beispielsweise bis zum einen Leistungsumfang innerhalb eines vorbestimmten Rahmens flexibel in Anspruch zu nehmen. Die Kontrolle erfolgt über das Bewegungsprofil mit Hilfe des Ortungssystems.

Mit der Identifikation können die zusätzlich notwendigen Parameter wie Uhrzeit, Datum, eventuell auch Witterungsbedingungen, usw. ebenfalls festgehalten werden.

Bei dieser Ausführungsform erfolgt die Abrechnung und Bezahlung 14 der in Anspruch genommenen Leistung erst nach der Inanspruchnahme, da der Leistungsumfang flexibel ist.

### Bezugszeichenliste:

- 1: Eingabeeinheit
- 2: Buchungsrechner
- 3: Leitung
- 4: Abrechnungsstelle
- 5: Kontrolleinheit
- 6: Identifikationseinheit
- 7: Buchung
- 8: Abrechnung
- 9: Freigabe
- 10: Ortungssystem
- 11: Prüfung
- 12: Abbruch
- 13: Leistung
- 14: Abrechnung und Bezahlung

## Patentansprüche

1. Vorrichtung zur Erhebung von Gebühren, wie Straßenbenutzungsgebühren oder dergleichen, die von einer bestimmten, vom Gebührenpflichtigen gewählten Wegstrecke abhängen, wobei ein Ortungssystem (10) zur Erfassung eines Bewegungsprofils des Gebührenpflichtigen vorgesehen ist, **dadurch gekennzeichnet, dass** das Ortungssystem (10) an gebührenpflichtigen Streckenabschnitten installierte Sende- und Empfangseinheiten zur Markierung von Streckenabschnitten umfasst, die mit einer Kontrolleinheit (5) in Verbindung stehen und die drahtlos mit entsprechenden, vom Gebührenpflichtigen mitgeführten Sende- und Empfangseinheiten (6) kommunizieren, um den Gebührenpflichtigen beim Passieren der Sende- und Empfangseinheiten (6) zu identifizieren.

2. Vorrichtung nach Anspruch 1, **dadurch gekennzeichnet, dass** eine über ein öffentliches Datennetz zugängliche Buchungsstelle zur Buchung eines gebührenpflichtigen Wegs vorgesehen ist.

3. Vorrichtung nach einem der vorgenannten Ansprüche, **dadurch gekennzeichnet, dass** eine Einheit zur bargeldlosen Zahlung vorgesehen ist.

4. Vorrichtung nach einem der vorgenannten Ansprüche, **dadurch gekennzeichnet, dass** eine Einheit zur Gebührenkontoführung vorgesehen ist.

5. Vorrichtung nach einem der vorgenannten Ansprüche, **dadurch gekennzeichnet, dass** eine flexible Berechnung der Gebührenhöhe aufgrund des Mittels des Ortungssystems erfassten Bewegungsprofils vorgesehen ist.

6. Vorrichtung nach einem der vorgenannten Ansprüche, **dadurch gekennzeichnet, dass** ein Identifikationsmedium für die Identifikation des Gebührenpflichtigen vorgesehen ist.

7. Vorrichtung nach einem der vorgenannten Ansprüche, **dadurch gekennzeichnet, dass** ein bargeldloses elektronisches Gebührenzahlungssystem vorgesehen ist.

8. Vorrichtung nach einem der vorgenannten Ansprüche, **dadurch gekennzeichnet, dass** das Identifikationsmedium als Zahlungsmittel ausgebildet ist.

9. Vorrichtung nach einem der vorgenannten Ansprüche, **dadurch gekennzeichnet, dass** das Identifikationsmedium ein zu weiteren Zwecken im Verkehr befindliches elektronisch lesbares Medium ist.

10. Vorrichtung nach einem der vorgenannten Ansprüche, **dadurch gekennzeichnet, dass** das Identifikationsmedium zugleich als Zahlungsmittel dient.

11. Vorrichtung nach einem der vorgenannten Ansprüche, **dadurch gekennzeichnet, dass** das Identifikationsmedium von der Buchungsstelle (2) generierbar ist.

12. , vorrichtung nach einem der vorgenannten Ansprüche, **dadurch gekennzeichnet, dass** als Identifikationsmedium eine Personenidentifikationsnummer, ein elektronisch lesbarer Personalausweis, ein elektronisch lesbarer Führerschein, eine elektronisch lesbare Kreditkarte, eine vom Betreiber der erfindungsgemäßen Vorrichtung separat ausgegebene Chipkarte, eine Krankenversicherungskarte und/oder eine Chipkarte zur Freigabe eines Funktelefones umfasst.

13. Vorrichtung nach einem der vorgenannten Ansprüche, **dadurch gekennzeichnet, dass** die Vorrichtung eine Erfassung und Kontrolle von Straßenbenutzungsgebühren umfasst.

14. Vorrichtung nach einem der vorgenannten Ansprüche, **dadurch gekennzeichnet, dass** eine Erfassung und Kontrolle der Benutzung eine Skiarena, einer Erholungslandschaft und/oder eines Spieleparks vorgesehen ist.

15. Vorrichtung nach einem der vorgenannten Ansprüche, **dadurch gekennzeichnet, dass** eine Buchung und Kontrolle der Benutzung von öffentlichen Verkehrsmitteln vorgesehen ist.

## Claims

1. Device for levying charges, such as road tolls or the like, which depend on a certain stretch of road chosen by the person liable for the charge, a tracking system (10) for detecting a movement profile of the person liable for the charge being provided, **characterised in that** the tracking system (10) comprises transmitting and receiving units, installed on sections of road liable to a charge, for marking sections of road, which units are connected to a control unit (5) and communicate wirelessly with corresponding transmission and receiving units (6) carried by the person liable for the charge, to identify that person when he passes the transmitting and receiving units (6).

2. Device according to claim 1, **characterised in that** a registration point accessible via a public data network is provided for registering a route liable to a charge.

3. Device according to either of the preceding claims, **characterised in that** a unit for cashless payment is provided.

4. Device according to any of the preceding claims, **characterised in that** a unit for managing a charge account is provided.

5. Device according to any of the preceding claims, **characterised in that** a flexible calculation of the level of charges is provided on the basis of the movement profile detected by means of the tracking system.

6. Device according to any of the preceding claims, **characterised in that** an identification medium is provided for identifying the person liable to the charge.

7. Device according to any of the preceding claims, **characterised in that** a cashless, electronic charge payment system is provided.

8. Device according to any of the preceding claims, **characterised in that** the identification medium is designed as a payment means.

9. Device according to any of the preceding claims, **characterised in that** the identification medium is an electronically readable medium located for other purposes in the traffic.

10. Device according to any of the preceding claims, **characterised in that** the identification medium is simultaneously a payment means.

11. Device according to any of the preceding claims, **characterised in that** the identification medium can be generated by the registration point (2).

12. Device according to any of the preceding claims, **characterised in that** the identification medium comprises a personal identification number, an electronically readable identification card, an electronically readable driver's licence, and electronically readable credit card, a chip card issued separately by the operator of the device according to the invention, a medical insurance card and/or a chip card to release a mobile radio telephone.

13. Device according to any of the preceding claims, **characterised in that** the device comprises detection and control of road tolls.

14. Device according to any of the preceding claims, **characterised in that** a detection and control of the use of a skiing area, a health resort and/or a theme park is provided.

15. Device according to any of the preceding claims, **characterised in that** registering and control of the use of public transport is provided.

## Revendications

1. Dispositif pour percevoir des taxes, comme des taxes d'utilisation de routes ou analogues, qui dépendent d'un parcours déterminé, choisi par la personne taxée, un système de localisation (10) étant prévu pour détecter un profil de déplacement de la personne taxée,
**caractérisé en ce que** le système de localisation (10) comporte des unités d'émission et de réception installées sur des tronçons de trajet soumis à péage pour repérer des tronçons de trajet, qui sont en liaison avec une unité de contrôle (5) et qui communiquent sans fils avec des unités d'émission et de réception correspondantes (6) portées par la personne taxée, pour identifier la personne taxée lors du passage des unités d'émission et de réception (6).

2. Dispositif selon la revendication 1,
**caractérisé en ce qu'**un point de comptabilisation, accessible par l'intermédiaire d'un réseau de données public, est prévu pour comptabiliser un trajet à péage.

3. Dispositif selon une des revendications précitées,
**caractérisé en ce qu'**une unité pour le paiement sans espèces est prévue.

4. Dispositif selon une des revendications précitées,
**caractérisé en ce qu'**une unité pour le relevé de compte des taxes est prévue.

5. Dispositif selon une des revendications précitées,
**caractérisé en ce qu'**un calcul souple du montant des taxes est prévu grâce au profil de déplacement détecté par le système de localisation.

6. Dispositif selon une des revendications précitées,
**caractérisé en ce qu'**un moyen d'identification pour l'identification de la personne taxée est prévu.

7. Dispositif selon une des revendications précitées,
**caractérisé en ce qu'**un système de paiement de taxes électronique sans espèces est prévu.

8. Dispositif selon une des revendications précitées,
**caractérisé en ce que** le moyen d'identification est réalisé comme moyen de paiement.

9. Dispositif selon une des revendications précitées,
**caractérisé en ce que** le moyen d'identification est un moyen pouvant être lu de façon électronique, se trouvant dans le trafic pour d'autres buts.

10. Dispositif selon une des revendications précitées,
**caractérisé en ce que** le moyen d'identification sert en même temps comme moyen de paiement.

11. Dispositif selon une des revendications précitées,
**caractérisé en ce que** le moyen d'identification peut être engendré par l'endroit de comptabilisation (2).

12. Dispositif selon une des revendications précitées,
**caractérisé en ce que** le moyen d'identification comporte un numéro d'identification d'une personne, une pièce d'identité personnelle pouvant être lue de façon électronique, un permis de conduire pouvant être lu de façon électronique, une carte de crédit pouvant être lue de façon électronique, une carte à puce distribuée de façon séparée par l'exploitant du dispositif selon l'invention, une carte d'assurance-maladie et/ou une carte à puce pour débloquer un radiotéléphone.

13. Dispositif selon une des revendications précitées,
**caractérisé en ce que** le dispositif comporte une détection et un contrôle de taxes d'utilisation de routes.

14. Dispositif selon une des revendications précitées,
**caractérisé en ce qu'**une détection et un contrôle de l'utilisation d'une piste de ski, d'un terrain de récréation et/ou d'un parc de jeux sont prévus.

15. Dispositif selon une des revendications précitées,
**caractérisé en ce qu'**une comptabilisation et un contrôle de l'utilisation de moyens de transport publics sont prévus.
